Europäisches Patentamt

European Patent Office

Office européen des brevets

(19)

(11) Numéro de publication: **0 180 519**
**B1**

## (12) FASCICULE DE BREVET EUROPEEN

(45) Date de publication du fascicule du brevet:
30.03.88

(21) Numéro de dépôt: **85402077.3**

(22) Date de dépôt: **28.10.85**

(51) Int. Cl.⁴: **B 64 D 7/08,** F 15 B 15/20

(54) **Vérin à actions distinctes et successives.**

(30) Priorité: **30.10.84 FR 8416575**

(43) Date de publication de la demande:
**07.05.86 Bulletin 86/19**

(45) Mention de la délivrance du brevet:
**30.03.88 Bulletin 88/13**

(84) Etats contractants désignés:
**DE GB**

(56) Documents cités:
**US - A - 3 010 752**

(73) Titulaire: **R. ALKAN & Cie., Rue du 8 mai 1945,
F-94460 Valenton (FR)**

(72) Inventeur: **Coutin, Pierre, 117, avenue Général Michel
Bizot, F-75012 Paris (FR)**
Inventeur: **Grosselin, Daniel, 3, avenue Maurice de
Vlaemynck, Pavillon 24 F-76680 Roissy (FR)**

(74) Mandataire: **Hud, Robert, Cabinet COLLIGNON 6, rue de
Madrid, F-75008 Paris (FR)**

## Description

La présente invention est relative à un vérin du type décrit dans le préambule de la revendication 1 et qui est commandé par un fluide sous pression et qui comporte deux tiges d'actionnement ayant des actions successives sur deux organes distincts. Un tel vérin convient notamment pour l'actionnement de systèmes de largage de charges à partir d'un aéronef, l'une des deux tiges actionnant par exemple un bras avant dénommé «basculeur» tandis que l'autre tige actionne un bras ou levier arrière, mais l'invention n'est pas limitée à cette application précise et pourrait s'appliquer avantageusement à d'autres mécanismes. Dans l'application particulière indiquée ci-dessus, le basculeur est destiné à actionner en premier un organe de déverrouillage et de largage tandis qu'aussitôt après cette action du basculeur le levier arrière est actionné pour écarter la charge larguée de l'aéronef avant le retour des deux tiges de vérin à leur position initiale de repos.

Le vérin selon l'invention comprend, comme tout vérin commandé par un fluide sous pression, un cylindre enfermant un piston mobile dans la direction de l'axe du cylindre mais il comporte deux tiges coaxiales agissant respectivement en dehors des deux extrémités du cylindre et comprenant une tige creuse externe solidaire du piston soumis au fluide de commande et une tige interne verrouillable à la tige externe sur une partie de la course de cette tige externe avec son piston. Le verrouillage prévu des deux tiges l'une à l'autre est assuré automatiquement par des pièces à déplacement radial portées par la tige interne et pouvant coopérer avec les logements ménagés dans l'alésage de la tige externe de façon que la tige externe assure une action mécanique par une course plus longue que la course de la tige interne limitée à la fraction de course du piston de vérin pendant laquelle cette tige interne est verrouillée à la tige externe. L'invention est caractérisé par la deuxième partie de la revendication 1.

De préférence, chacune des tiges comporte une liaison d'action mécanique, par exemple une chape de liaison, les deux chapes étant prévues respectivement au-delà des deux extrémités du cylindre de vérin dans lequel sont engagées les deux tiges.

Le piston du vérin peut comporter un prolongement de diamètre réduit coopérant, en début de course à partir de la position de repos, avec un cylindre court de diamètre adapté pour transmettre aux tiges un effort moindre jusqu'au dégagement de ce prolongement en dehors du cylindre court, ce dégagement permettant l'utilisation de toute la section du piston pour la transmission d'un plus grand effort. Cette disposition permet d'adapter par exemple l'effort sur le basculeur, s'il doit être moindre que celui sur le levier arrière ou si le mouvement initial ne doit pas être brutal.

Pour bien faire comprendre l'invention, on en décrira ci-après, à titre d'exemple, une forme d'exécution représentée au dessin schématique annexé, dans lequel:

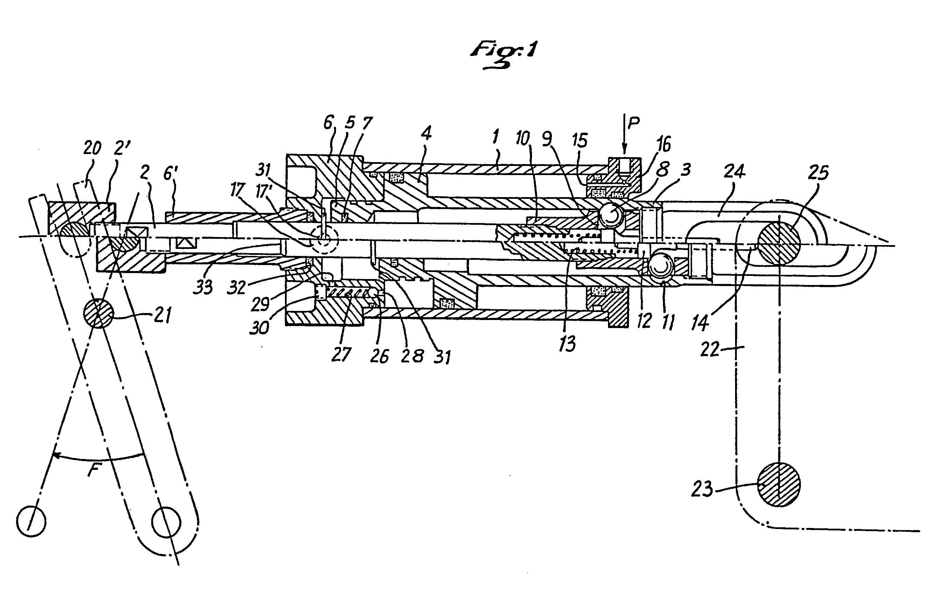

la figure 1 est une coupe axiale du vérin, la coupe étant représentée pour la position de repos dans la moitié supérieure de la figure et en position de fin de course du basculeur dans la moitié inférieure de la figure, la tige interne n'étant représentée que partiellement en coupe et la chape d'actionnement de la tige externe étant représentée en élévation; et

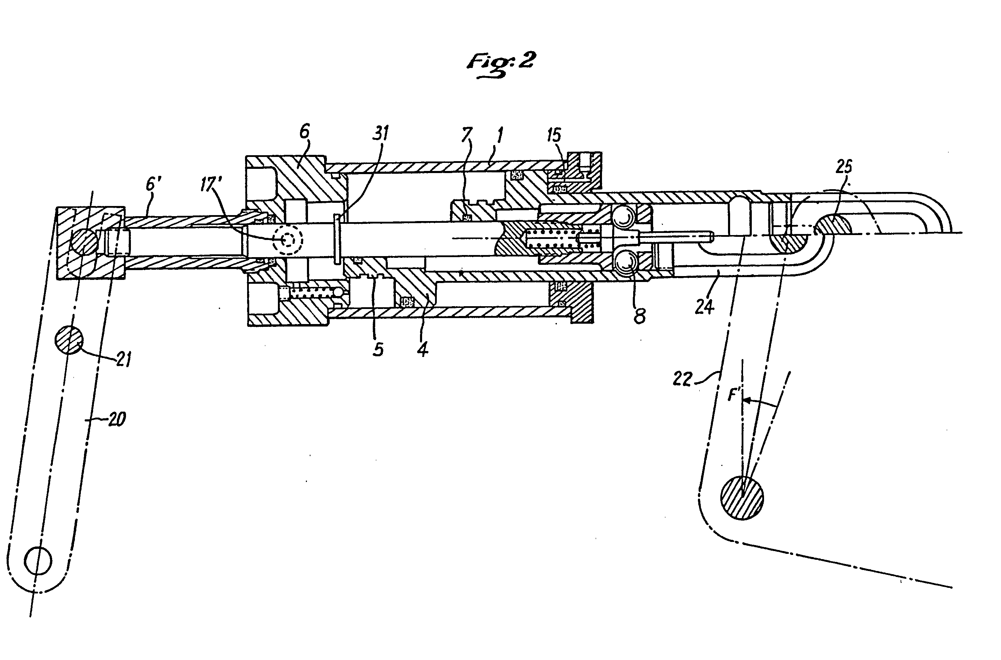

la figure 2 est une coupe axiale du vérin, représentée pour la position de fin de course de travail dans la moitié supérieure et pour la position du début de mouvement de retour vers la position de repos dans la moitié inférieure de la figure.

Le vérin est constitué par un corps cylindrique 1 monté sur la structure portante par un moyen quelconque connu, de préférence avec possibilité de débattement angulaire, par exemple par des tourillons radiaux 17. Ce vérin actionne deux tiges coulissantes coaxiales comprenant une tige interne 2 traversant l'extrémité de gauche du corps de vérin 1 et une tige externe 3 traversant l'autre extrémité du corps de vérin et solidaire du piston 4 qui présente vers la gauche un prolongement 5 de diamètre réduit destiné à coopérer pendant une fraction de la course du piston avec un cylindre court ménagé dans l'embout terminal 6 de l'extrémité de gauche du vérin représenté. Ce prolongement 5 est traversé par la tige interne 2 qu'il entoure d'un joint coulissant d'étanchéité 7.

Les tiges 2 et 3 peuvent être verrouillées l'une à l'autre par des billes 8 disposées dans des logements radiaux 9 d'un embout 10 qui est vissé à l'extrémité de droite de la tige 2, ces billes pouvant pénétrer dans une gorge interne 11 de la tige 3 sous la poussée d'un verrou de révolution concentrique 12 repoussé par un ressort 13 prolongé par un doigt de découplage 14 qui dépasse l'extrémité de droite de la tige 2.

En position dite «de repos», les tiges 2 et 3 sont verrouillées entre elles et le piston 4 est en butée à gauche contre l'embout 6 du corps de vérin, par exemple sous l'effet d'une pression du «retour» P transmise par l'orifice 15 de l'embout opposé 16 du corps de vérin.

L'introduction du fluide de commande par un orifice de travail 17', qui dans l'exemple représenté traverse l'un des tourillons de montage 17 du vérin, agit d'abord sur le prolongement 5 du piston 4 grâce à des chicanes de perte de pression et un faible jeu du prolongement 5 de piston dans le cylindre de l'embout 6. Les tiges 2 et 3 sont alors déplacées ensemble vers la droite des figures et la chape 2' de la tige 2 fait mouvoir le basculeur 20 selon la flèche F autour de son axe fixe 21 tandis que la tige 3 est sans action sur le levier arrière 22 d'axe 23 grâce au trou allongé de la chape de poussée 24 qui prolonge la tige 3 et coulisse sur le tourillon 25 fixé au levier arrière 22 sans déplacer ce tourillon dans la première fraction de course considérée.

A la fin de la course de la tige interne 2, c'est-à-dire dans la position de la moitié inférieure de la figure 1, il y a déverrouillage mutuel des deux tiges 2-3 sous l'action du doigt 14 butant contre le tourillon 25 et repoussant ainsi le verrou 12 contre l'action de son ressort en permettant aux billes 8 de se dégager de la gorge 11 ménagée dans la tige 3. Cette tige 3 continue seule sa course vers la droite en faisant basculer le levier arrière 22 jusqu'à la position de fin de course de la moitié supérieure de la figure 2. Cette partie de la course vers la droite de la tige 3 se fait à pleine puissance puisque le fluide de commande agit alors sur toute la surface utile du piston 4, tandis que la tige 2 déverrouillée reste immobile, la chape 2' étant en butée contre l'embout 6 prolongé dans l'exemple représenté par un manchon 6' vissé sur lui.

La mise à l'air libre de l'orifice 17' et l'introduction du fluide sous pression par l'orifice 15 introduit les mouvements successifs inverses et la remise en position «repos». La moitié inférieure de la figure 2 montre le début du mouvement de retour de la tige externe 3 au moment où le trou allongé de la chape 24, revenant au contact du tourillon 25 par son extrémité de droite, tire ce tourillon vers la gauche en relevant ainsi le levier arrière 22 selon le mouvement indiqué par la flèche F' sur la figure 2. La compatibilité des mouvements est assurée, de façon connue par un petit débattement angulaire du cylindre de vérin 1 autour des tourillons 17.

Si le fluide de commande est incompressible, c'est-à-dire dans le cas d'une commande hydraulique, la fin de ce mouvement de relevage pourrait être extrêmement lente car la portion de liquide emprisonnée entre le piston 4, son prolongement 5 et l'embout 6 ne s'évacuerait que lentement avec laminage dans le faible jeu et les chicanes qui existent entre ce prolongement 5 et le cylindre de l'embout 6. Pour éviter ou limiter ce ralentissement, on utilise alors au moins un clapet de décharge comportant par exemple une bille 26 rappelée par un ressort 27 contre le siège 28 d'un passage 29 traversant l'embout 6 avec un bouchon d'usinage 30. Ce clapet, représenté au dessin dans l'embout 6, pourrait aussi bien être placé dans le prolongement 5.

Dans le cas d'une commande pneumatique, le ralentissement est moindre car le gaz emprisonné à gauche du piston 4 peut se comprimer. Un petit clapet de décharge analogue au précédent pourrait être néanmoins utile pour éviter un rebondissement du piston 4 sous l'effet de cette surpression.

On remarquera que la tige interne 2 comporte un épaulement 31 à l'intérieur du piston mais en dehors de la tige externe 3 pour servir de butée de fin de course au contact de l'embout 6, comme indiqué sur la figure 1. Cela interdit à la tige 2, donc aussi au basculeur 20, d'aller au-delà de leurs positions de repos lors du mouvement de retour si le frottement entre les deux tiges, en particulier celui du joint d'étanchéité 7, développe une force plus grande que celui du guidage de cette tige 2 dans l'embout augmenté du frottement du joint d'étanchéité correspondant 32.

On pourrait aussi bien employer sur cette tige 2, et dans le même but, un épaulement 33 à l'extérieur du vérin venant buter contre le manchon 6' vissé dans l'embout 6.

De plus, la tige 2 pourrait avoir des diamètres différents au droit des joints d'étanchéité 7 et 32, par exemple de part et d'autre de l'épaulement 31.

Si le joint 32 était le plus petit, la tige 2 déverrouillée recevrait de la part du fluide de commande une force qui la maintiendrait en position rentrée avec la chape 2' en butée contre le manchon 6'.

Si au contraire le joint 32 était d'un diamètre supérieur, la tige 2 serait repoussée en position de sortie aussitôt après déverrouillage des billes 8 jusqu'à butée de l'épaulement 31 contre l'embout 6 ou de l'épaulement 33 contre le manchon 6'.

## Revendications

1. Vérin à actions distinctes et successives sous l'effet d'un fluide sous pression introduit à une extrémité (6) du cylindre (1) de vérin pour agir sur un piston (4) coulissant à l'intérieur dudit cylindre (1), le vérin comportant deux tiges coaxiales dont une tige interne (2) en liaison d'actionnement mécanique (21) avec un premier organe de commande à une extrémité du vérin et une tige externe (3) portant le piston (4) et en liaison d'actionnement mécanique (24) avec un second organe de commande à l'autre extrémité du vérin, la tige interne (2) étant liée à la tige externe (3) par un dispositif de verrouillage (8) de façon à effectuer une action mécanique sur le premier organe de commande pendant une fraction de la course du piston (4) jusqu'à ce que le déplacement commun des tiges (2, 3) aboutisse au déverrouillage mutuel de celles-ci en permettant l'actionnement du second organe de commande par la tige externe (3), caractérisé en ce que la tige externe (3) est d'un diamètre inférieur à celui du piston (4) en permettant un fonctionnement à double effet qui assure le retour du piston (4) au moyen de fluide sous pression introduit à l'autre extrémité (16) du cylindre (1), et en ce qu'un joint d'étanchéité (32) est disposé entre la tige interne (2) et une extrémité du vérin en dehors de la tige externe (3).

2. Vérin selon la revendication 1, caractérisé en ce qu'un joint d'étanchéité (7) est interposé entre les tiges (2, 3) du vérin.

3. Vérin selon la revendication 1 ou la revendication 2, caractérisé en ce que le dispositif de verrouillage comprend des pièces (8) se déplaçant radialement à l'intérieur de l'une (2) des tiges coaxiales et pénétrant dans des logements (11) de l'autre tige (3).

4. Vérin selon la revendication 3, caractérisé en ce que les pièces de verrouillage (8) sont logées dans des ouvertures de la tige interne (2) et coopèrent avec un verrou (12) actionné par un doigt de découplage (14) qui dépasse l'une des extrémités de la tige interne (2).

5. Vérin selon la revendication 4, caractérisé en ce que le doigt de découplage (14) est à l'intérieur de la liaison (24) d'action mécanique de la tige externe (3) à l'extérieur du vérin.

6. Vérin selon l'une quelconque des revendications précédentes, caractérisé en ce que le piston comporte un prolongement de petit diamètre (5) qui s'engage à faible jeu, pendant une partie de la course, dans un cylindre court (6) de diamètre adapté, de façon à créer un effort moindre pendant ladite partie de la course.

7. Vérin selon la revendication 6, caractérisé par un clapet de décharge (26) dans le cylindre court.

8. Vérin selon la revendication 6, caractérisé par un clapet de décharge dans le prolongement de petit diamètre du piston.

9. Vérin selon l'une quelconque des revendications 2 à 8, caractérisé en ce que le joint d'étanchéité (7) entre les tiges interne et externe et le joint d'étanchéité (32) entre la tige interne et l'extérieur sont de diamètres différents, de même que les diamètres correspondants de la tige interne, de façon que celle-ci soit soumis à un effort sous l'action du fluide sous pression.

10. Vérin selon la revendication 1, caractérisé en ce que le cylindre de vérin se termine à une première extrémité par un premier embout (6) et à sa seconde extrémité par un second embout (16), ladite tige interne (2) traversant le premier embout (6) et coopérant par une chape (2') avec ledit premier organe de commande (20) pivotant autour d'un axe fixe (21) et ladite tige externe (3) traversant ledit second embout (16) et coopérant avec ledit second organe de commande (22) par un moyen (24) à action différée, ledit dispositif verrouillage comprenant des billes (8) disposées dans des logements radiaux (9) d'un embout (10) de l'extrémité de la tige interne (2) du côté du second embout (16) et conçues, sous la poussée d'un verrou (12) repoussé élastiquement et prolongé par un doigt (14), pour pénétrer dans une gorge interne (11) de la tige externe (3), l'application d'une pression hydraulique de commande entre l'embout (6) et un prolongement (5) du piston (4) assurant d'abord le déplacement des tiges (2, 3) ensemble vers ladite seconde extrémité du vérin en actionnant ledit premier organe de commande (20) sans agir sur le second organe de commande (22) puis, après achèvement de la course de la tige interne (2) et déverrouillage mutuel des deux tiges (2, 3) sous l'action du doigt (14) engageant une butée fixe pour permettre aux billes (8) de se dégager de la gorge (11) de la tige externe (3), de déplacement de la tige externe (3) vers la seconde extrémité du vérin en actionnant ledit organe de commande alors que la tige interne (2) reste immobilisée par une butée (6').

**Patentansprüche**

1. Kraftzylinder bzw. Hebe- oder Zugvorrichtung mit unterschiedlichen aufeinanderfolgenden Wirkungen, gesteuert durch ein Druckmittel, das zur Beaufschlagung eines im Inneren des Zylinders (1) gleitend angeordneten Kolbens (4) an einem Ende (6) des Zylinders (1) des Kraftzylinders bzw. der Hebe- oder Zugvorrichtung einleitbar ist, bei dem der Kraftzylinder zwei koaxiale Kolbenstangen aufweist, von denen die innenliegende Kolbenstange (2) mit einem ersten Steuerelement an einem Ende des Kraftzylinders in mechanisch wirksamer Verbindung (21) steht, während die aussenliegende Kolbenstange (3) den Kolben (4) trägt und mit einem zweiten Steuerelement am anderen Ende des Kraftzylinders in mechanisch wirksamer Verbindung (24) steht und die innenliegende Kolbenstange (2) mit der aussenliegenden Kolbenstange (3) über eine Verriegelungseinrichtung (8) in der Weise verbunden ist, dass das erste Steuerelement während eines Teils des Hubs des Kolbens (4) solange mechanisch betätigbar ist, bis die gemeinsame Verschiebung beider Kolbenstangen (2, 3) zur gegenseitigen Entriegelung zwischen den Kolbenstangen führt und dabei die Betätigung des zweiten Steuerelements durch die aussenliegende Kolbenstange (3) gestattet, dadurch gekennzeichnet, dass die aussenliegende Kolbenstange (3) einen kleineren Durchmesser als der Kolben (4) aufweist, wodurch eine Doppelwirkung erzielbar ist, die die Rückstellung des Kolbens (4) mittels des Druckmittels sicherstellt, das am anderen Ende (16) des Zylinders (1) einleitbar ist, und dass eine Dichtung (32) zwischen der innenliegenden Kolbenstange (2) und einem Ende des Kraftzylinders ausserhalb der aussenliegenden Kolbenstange (3) angeordnet ist.

2. Kraftzylinder nach Anspruch 1, dadurch gekennzeichnet, dass eine Dichtung (7) zwischen den beiden Kolbenstangen (2, 3) angeordnet ist.

3. Kraftzylinder nach Anspruch 1 oder 2, dadurch gekennzeichnet, dass die Verriegelungseinrichtung Teile (8) aufweist, welche innerhalb der einen Kolbenstange (2) der beiden koaxialen Kolbenstangen radial verschiebbar sind und in Aufnahmeöffnungen (11) in der anderen Kolbenstange (3) eindringen.

4. Kraftzylinder nach Anspruch 3, dadurch gekennzeichnet, dass die Verriegelungsteile (8) in Öffnungen in der innenliegenden Kolbenstange (2) liegen und mit einem Riegel (12) zusammenwirken, welcher über einen Entkopplungszapfen (14) betätigbar ist, der über eines der Enden in der innenliegenden Kolbenstange (2) hinaussteht.

5. Kraftzylinder nach Anspruch 4, dadurch gekennzeichnet, dass der Entkopplungszapfen (14) im Inneren der mechanisch wirkenden Verbindung (24) der aussenliegenden Kolbenstange (3) ausserhalb des Kraftzylinders angeordnet ist.

6. Kraftzylinder nach einem der vorhergehenden Ansprüche, dadurch gekennzeichnet, dass der Kolben (4) eine Verlängerung (5) mit kleinem Durchmesser aufweist, welcher unter geringem Spiel während eines Teils des Arbeitshubs in einen kurzen Zylinder (6) mit entsprechendem Durchmesser derart eingreift, dass während dieses Teils des Arbeitshubs eine geringere Kraft entsteht.

7. Kraftzylinder nach Anspruch 6, gekennzeichnet durch ein Ausströmventil (26) im kurzen Zylinder (6).

8. Kraftzylinder nach Anspruch 6, gekennzeichnet durch ein Ausströmventil in der Kolbenverlängerung (5) mit kleinerem Durchmesser.

9. Kraftzylinder nach einem der Ansprüche 2 bis 8, dadurch gekennzeichnet, dass die Dichtung (7) zwischen der innenliegenden Kolbenstange (2) und der aussenliegenden Kolbenstange (3) und die Dichtung (32) zwischen der innenliegenden Kolbenstange (2) und dem Aussenraum, analog zu den entsprechenden Durchmessern der innenliegenden Kolbenstange (2), derart unterschiedliche Durchmesser aufweisen, dass diese unter der Einwirkung des Druckmittels mit einer Kraft betätigbar ist.

10. Kraftzylinder nach Anspruch 1, dadurch gekennzeichnet, dass der Zylinder an seinem ersten Ende in einem ersten Ansatz (6) und am zweiten Ende in einem zweiten Ansatz (16) derart ausläuft, dass die innenliegende Kolbenstange (2) durch den ersten Ansatz (6) verläuft und über einen Deckel (2') mit dem ersten Steuerelement (20) zusammenwirkt, welches um eine feststehende Achse (21) drehbar angeordnet ist, während die aussenliegende Kolbenstange (3) durch den zweiten Ansatz (16) geführt ist und mit dem zweiten Steuerelement (22) über eine anders wirkende Einrichtung (24) zusammenwirkt, und dass die Verriegelungseinrichtung Kugeln (8) aufweist, die in radialen Lagern (9) eines Ansatzes (10) am Ende der innenliegenden Kolbenstange (2) auf der Seite des zweiten Ansatzes (16) gelagert und so ausgelegt sind, dass sie unter der Stosswirkung eines elastisch eingestossenen Riegels (12), der als Verlängerung einen Zapfen (14) trägt, in eine innenliegende Auskehlung (11) der aussenliegenden Kolbenstange (3) eindringen, wodurch unter der Einwirkung eines hydraulischen Steuerdrucks zwischen dem Ansatz (6) und einer Verlängerung (5) des Kolbens (4) zunächst die gemeinsame Verschiebung der beiden Kolbenstangen (2, 3) zum zweiten Ende des Kraftzylinders stattfindet, bei der das erste Steuerelement (20) ohne Betätigung des zweiten Steuerelements (22) betätigbar ist, worauf nach Durchlaufen des Hubs der innenliegenden Kolbenstange (2) und nach gegenseitiger Entriegelung der beiden Kolbenstangen (2, 3) unter Einwirkung des Zapfens (14), der derart mit einem feststehenden Anschlag in Eingriff steht, dass die Kugeln (8) aus der Auskehlung (11) der aussenliegenden Kolbenstange (3) freikommen, die Verschiebung der aussenliegenden Kolbenstange (3) zum zweiten Ende des Kraftzylinders das Steuerelement betätigt, während die innenliegende Kolbenstange (2) durch einen Anschlag (6') in unbeweglicher Stellung haltbar ist.

## Claims

1. Jack capable of distinct and subsequent active strokes by the action of a fluid under pressure introduced at one end (6) of the jack cylinder (1) so that it acts on a piston (4) sliding inside the said cylinder (1), the jack comprising two coaxial rods, one of which is an internal rod (2) in a mechanically actuating connection (21) with a first control member at one end of the jack and an external rod (3) carrying the piston (4) and in a mechanical acting connection (24) with a second control member at the other end of the jack, the internal rod (2) being connected to the external rod (3) through a locking device (8) in such a way as to effect a mechanical action of the first control member over a fraction of the stroke of the piston (4) until the joint movement of the rods (2, 3) ends in their mutual release whilst permitting the operation of the second control member by the external rod (3), characterised in that the external rod (3) has a smaller diameter than that of the piston (4), whilst permitting a double acting operation which ensures the return of the piston (4) by means of fluid under pressure introduced at the other end (16) of the cylinder (1) and in that a seal (32) is located between the internal rod (2) and an end of the jack outside the external rod (3).

2. Jack according to claim 1, characterised in that a seal (7) is located between the rods (2, 3) of the jack.

3. Jack according to claim 1 or claim 2, characterised in that the locking device includes parts (8) which are displaced radially inside one (2) of the coaxial rods and which penetrate the housings (11) of the other rod (3).

4. Jack according to claim 3, characterised in that the locking parts (8) are housed in openings of the internal rod (2) and operate in conjunction with a lock (12) operated by a decoupling finger (14) which exceeds one of the ends of the internal rod (2).

5. Jack according to claim 4, characterised in that the decoupling finger (14) is located inside the mechanical acting connection (24) of the external rod (3) outside the jack.

6. Jack according to any one of the preceding claims, characterised in that the piston includes a small diameter extension (5) which engages with a small amount of play for a part of the stroke with a short cylinder (6) with a matching diameter so as to create a minimum load during the said part of the stroke.

7. Jack according to claim 6, characterised by an outlet valve (26) in the short cylinder.

8. Jack according to claim 6, characterised by an outlet valve in the small diameter extension of the piston.

9. Jack according to any one of claims 2 to 8, characterised in that the seal (7) between the internal and external rods and the seal (32) between the internal rod and the outside have different diameters, in the same way as the corresponding diameters of the internal rod, in such a waa that the latter is subjected to a load by the action of the fluid under pressure.

10. Jack according to claim 1, characterised in that the jack cylinder is terminated at a first end by a first end piece (6) and at its second end by a second end piece (16), the said internal rod (2) crossing the first end piece (6) and operating through a cover (2') in conjuction with the said first control member (20) pivoting about a fixed axis (21) and the said external rod (3) crossing the said second end piece (16) and operating in conjuction with the said second control member (22) through a means (24) of deferred action, the said locking device comprising balls (8) arranged in the radial housings (9) of an end piece (10) of the end of the internal rod (2) on the side of the second end piece (16) and designed by the thrust of a lock (12) pushed back flexibly and extended by a finger (14), to penetrate an internal throat (11) of the external rod (3), the application of a control hydraulic pressure between the end piece (6) and an extension (5) of the piston (4) causing first of all the movement of the rods (2, 3) together towards the said second end of the jack by actuating the said first control member (20) without acting on the second control member (22), then after the completion of the stroke of the internal rod (2) and the mutual release of the two rods (2, 3) by the action of the finger (14) engaging a fixed stop to enable the balls (8) to be released from the throat (11) of the external rod (3), the movement of the external rod (3) towards the second end of the jack by acting on the said control member, whilst the internal rod (2) remains immobilised by a stop (6').

Fig.1

Fig.2